(19) Europäisches Patentamt
European Patent Office
Office européen des brevets

(11) **EP 1 864 397 B1**

(12) **EUROPÄISCHE PATENTSCHRIFT**

(45) Veröffentlichungstag und Bekanntmachung des Hinweises auf die Patenterteilung:
**17.01.2018 Patentblatt 2018/03**

(21) Anmeldenummer: **06723863.4**

(22) Anmeldetag: **30.03.2006**

(51) Int Cl.:
*H04W 52/28* (2009.01)    *H04W 52/34* (2009.01)
*H04W 52/36* (2009.01)

(86) Internationale Anmeldenummer:
**PCT/EP2006/002896**

(87) Internationale Veröffentlichungsnummer:
**WO 2006/103067 (05.10.2006 Gazette 2006/40)**

(54) **VERFAHREN ZUR SKALIERUNG EINES E-DCH KANALS**

METHOD FOR SCALING AN E-DCH CHANNEL

PROCEDE POUR METTRE A L'ECHELLE UN CANAL E-DCH

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.03.2005 DE 102005014851**

(43) Veröffentlichungstag der Anmeldung:
**12.12.2007 Patentblatt 2007/50**

(73) Patentinhaber: **Siemens Aktiengesellschaft 80333 München (DE)**

(72) Erfinder:
• **MICHEL, Jürgen**
 **81737 München (DE)**
• **RAAF, Bernhard**
 **82061 Neuried (DE)**

(56) Entgegenhaltungen:
**EP-A- 1 564 905      EP-A- 1 605 605
WO-A-2005/020465**

• **"Universal Mobile Telecommunications System (UMTS); Physical layer procedures (FDD) (3GPP TS 25.214 version 6.4.0 Release 6); ETSI TS 125 214" ETSI STANDARDS, EUROPEAN TELECOMMUNICATIONS STANDARDS INSTITUTE, SOPHIA-ANTIPO, FR, Bd. 3-R1, Nr. V640, Dezember 2004 (2004-12), XP014027622 ISSN: 0000-0001**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft Verfahren zur Sendeleistungssteuerung eines Teilnehmer-Endgerätes eines Funk-Kommunikationssystems, insbesondere eines Mobilfunksystems.

In Funk-Kommunikationssystemen, beispielsweise dem im Rahmen der 3GPP (Third Generation Partnership Project) standardisierten UMTS-Mobilfunksystem (Universal Mobile Telecommunication System), werden Informationen (beispielsweise Sprache, Bildinformation oder andere Daten) mit Hilfe von elektromagnetischen Wellen über eine Funkschnittstelle übertragen. Die Funkschnittstelle bezieht sich auf eine Verbindung zwischen einer Basisstation und Teilnehmer-Endgeräten, wobei die Teilnehmer-Endgeräte Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen.

Von der 3GPP wird derzeit auch der so genannte Enhanced UMTS Uplink Channel (E-DCH) als ein dedizierter Transportkanal für die Aufwärtsrichtung (engl. Uplink) spezifiziert, wie er unter anderem dem Kapitel 4.1.1.2 der technischen Spezifikation 3GPP TS 25.211 V6.4.0 (2005-03), "Physical channels and mapping of transport channels onto physical channels (FDD) (Release 6)", entnehmbar ist. Dieser Kanal wird nach den Kapiteln 5.2.1 sowie 5.2.1.3 dieser Spezifikation in einem so genannten uplink E-DCH Dedicated Physical Data Channel (uplink E-DPDCH) sowie zugehörigem uplink E-DCH Dedicated Physical Control Channel (uplink E-DPCCH) übertragen. Weitere Beschreibungen des E-DCH-Kanals sind zudem den technischen Spezifikationen 3GPP TS 25.808 V6.0.0 (2005-03), "FDD Enhanced Uplink; Physical Layer Aspects (Release 6)" sowie 3GPP TS 25.309 V6.2.0 (2005-03), "FDD Enhanced Uplink; Overall description; Stage 2 (Release 6)" entnehmbar. In Kapitel 5.1.2 bzw. entsprechenden Unterkapiteln der technischen Spezifikation 3GPP TS 25.214 V6.5.0 (2005-03), "Physical Layer Procedures (FDD) (Release 6)" sind zu den verschiedenen DPDCH- bzw. DPCCH-Kanälen Verfahren zur Sendeleistungsregelung angegeben.

Für den E-DCH wird eine paketorientierte Übertragung mit einem so genannten schnellen hybriden ARQ-Verfahren (HARQ - Hybrid Automatic Repeat Request) verwendet, ähnlich wie er für den ebenfalls von der 3GPP standardisierten so genannten HSDPA (High Speed Downlink Packet Access) verwendet werden soll. Im Unterschied zu HSDPA nutzt der E-DCH jedoch eine schnelle Leistungsregelung, wie sie in den technischen Spezifikationen zu den dedizierten Kanälen (DCH - Dedicated Channels) des Release 99 des Standards beschrieben ist. Die jeweils zu verwendende Sendeleistung eines Kanals (Release- 99-DCH und E-DCH) wird durch so genannte Leistungs-Offsets zu einem DPCCH-Referenzkanal (Dedicated Physical Control Channel) festgelegt, welche einem Teilnehmer-Endgerät von dem Netzwerk mittels einer Signalisierung auf höheren Schichten übermittelt oder aber von dem Teilnehmer-Endgerät mittels eines vorgegebenen Verfahrens aus Referenzdaten berechnet werden. Dies stellt sicher, dass jeder Kanal lediglich eine Sendeleistung beansprucht, die im Mittel eine jeweils geforderten Zielfehlerrate erfüllt.

Sollte nun das Teilnehmer-Endgerät im Rahmen der schnellen Leistungsregelung eine maximal zugelassene bzw. physikalisch mögliche Gesamtsendeleistung überschreiten, so wird das Sendesignal skaliert, d.h. mit einem eine bestimmte Dämpfung verursachenden Gewichtungsfaktor belegt. Dies verhindert durch die Nichtlinearität des Leistungsverstärkers bedingte Störungen von Signalübertragungen in benachbarten Frequenzbändern. Entsprechend der schnellen Sendeleistungsregelung arbeitet diese Skalierung ebenfalls auf "Slot"-Basis, d.h. die Sendeleistung ist von Slot zu Slot variierbar. Dies führt jedoch nicht zu einer Veränderung der Leistungsverhältnisse der einzelnen Kanäle zu dem Referenzkanal. Vielmehr werden in einem derartigen Fall alle Kanäle gleichmäßig skaliert.

Bedingt durch den in neueren Releases des UMTS-Standards eingeführten E-DCH-Kanal besteht das Sendesignal eines Teilnehmer-Endgerätes neben einem oder mehreren DPDCH(s) sowie zugehörigem DPCCH aus einem oder mehreren E-DPDCH(s). Entsprechend obiger Beschreibung würde die "Slot"-basierte Skalierung die Gesamtsendeleistung des Teilnehmer-Endgerätes begrenzen, ohne die Leistungsverhältnisse der einzelnen Kanäle zu dem DPCCH-Referenzkanal zu verändern. Da jedoch in dem Release 6 des Standards eine Priorisierung der Dienstqualität der Release-99-DCH-Kanäle gegenüber der Dienstqualität des E-DCH-Kanals vorgesehen ist, wird neben der "Slot"-basierten Skalierung die Einführung einer zusätzlichen "E-DCH TTI"-basierten Skalierung erwogen, welche am Anfang eines jeweiligen E-DCH TTIs durchgeführt wird. Ein TTI (Transmission Time Interval) weist in der Regel eine Länge von 3 bzw. 15 Slots auf, sodass die Regelung mit einer niedrigeren Periodizität erfolgt.

Somit ist in dem Release 6 eine "E-DCH TTI"-basierte Skalierung ausschließlich des E-DCH-Kanals, oder aber eine "Slot"-basierte Skalierung des E-DCH- und DCH-Kanals denkbar.

Bei einem Einsatz der "E-DCH TTI"-basierten Skalierung kann jedoch nachfolgend beschriebene Situation auftreten. Da der E-DCH ein Paketdaten-basierter Kanal ist, führt eine Skalierung der Sendeleistung dieses Kanals zu einer Übertragung eines Datenpakets mit einer geringeren als der vorgegebenen Zielenergie, wodurch empfangsseitig, d.h. auf Seiten der empfangenden Basisstation, die Blockfehlerrate (BLER - Block Error Rate) gegenüber einer vorgegebenen Zielblockfehlerrate in der Regel nachteilig erhöht wird. Weiterhin führt die Nutzung der "E-DCH TTI"-basierten Skalierung ausschließlich für den E-DCH-Kanal zu einer Veränderung des Leistungsverhältnisses des E-DCH-Kanals zu dem DPCCH-Referenzkanal, währenddessen die Leistungsverhältnisse der Release-99-DCH-Kanäle zu dem Referenzkanal unverändert bleiben.

Für den Fall, dass die äußere Sendeleistungsregelungsschleife (OLPC - Outer Loop Power Control) an dem E-DCH-Kanal orientiert ist, um beispielsweise die Blockfehlerrate des E-DCH-Kanals im Mittel konstant zu halten, kann die Sendeleistungsregelung jedoch der Skalierung nachteilig entgegen wirken. Signalisiert beispielsweise die Basisstation ein "up"-Kommando, d.h. fordert eine Erhöhung der Sendeleistung des E-DCH-Kanals durch das Teilnehmer-Endgerät an, so kann das Teilnehmer-Endgerät aufgrund der begrenzten Gesamtsendeleistung diesem Kommando nicht folgen, sondern wird weiterhin die Sendeleistung des E-DCH-Kanals skalieren. Dies gilt jedoch nicht für die Release-99-DCH-Kanäle, deren Sendeleistung von der inneren Sendeleistungsregelungsschleife (ILPC - Inner Loop Power Control) geregelt wird.

Die äußere Sendeleistungsregelungsschleife in der Basisstation bzw. Basisstationssteuerung realisiert daraufhin, dass sich die Blockfehlerrate des E-DCH-Kanals trotz Einhaltung des Zielwertes der inneren Sendeleistungsregelungsschleife verschlechtert (der DPCCH ist nicht skaliert), und erhöht wiederum den Zielwert der inneren Sendeleistungsregelungsschleife. Hierdurch wird die Leistung des DPCCH weiter angehoben und aufgrund der begrenzten Gesamtsendeleistung die Skalierung des E-DCH entsprechend weiter verstärkt, welches wiederum zu einer sich weiter verschlechternden Blockfehlerrate des E-DCH-Kanals führt. In diesem Fall kann die äußere Sendeleistungsregelungsschleife nicht mehr konvergieren, und fördert in mehreren Iterationen eine weiter gehende Erhöhung des Zielwertes an.

Sollte das Teilnehmer-Endgerät ab einem Zeitpunkt nicht mehr in der Sendeleistung begrenzt sein, beispielsweise aufgrund einer Annäherung an die Basisstation, so führte die übermäßige Erhöhung des Zielwertes der inneren Sendeleistungsregelungsschleife dazu, dass die Sendeleistung des E-DCH sehr schnell von dem Teilnehmer-Endgerät erhöht würde, welches wiederum zu einer starken Interferenzbeeinflussung paralleler Verbindungen und damit einhergehend zu einer Reduzierung der Systemkapazität führen würde.

Aufgabe der Erfindung ist es somit, ein Verfahren sowie ein Teilnehmer-Endgerät anzugeben, die eine Lösung der vorangehend beschriebenen Problems angeben. Diese Aufgabe wird durch die Merkmale der unabhängigen Patentansprüche gelöst. Vorteilhafte Weiterbildungen sind abhängigen Patentansprüchen entnehmbar.

Gemäß einem ersten Verfahren nach der Erfindung wird zur Steuerung einer Sendeleistung eines Teilnehmer-Endgerätes eines Funk-Kommunikationssystems eine Skalierung einer Sendeleistung eines ersten Kanals unabhängig von einer Skalierung einer Sendeleistung zumindest eines zweiten Kanals nur dann durchgeführt, wenn die Regelung der Sendeleistung nicht an dem ersten Kanal orientiert ist.

Auf obige System- und Problembeschreibung abgebildet wird erfindungsgemäß eine "E-DCH TTI"-basierte Skalierung ausschließlich für den E-DCH-Kanal beispielsweise nur dann verwendet, wenn die äußere Sendeleistungsregelungsschleife nicht an dem E-DCH-Kanal orientiert ist. Vorteilhaft wird hierdurch oben beschriebene mögliche Situation einer nicht konvergierenden Sendeleistungsregelung vermieden.

Gemäß einer ersten vorteilhaften Weiterbildung der Erfindung ermittelt das Teilnehmer-Endgerät auf Basis bestimmter Charakteristika bzw. Heuristik, ob die äußere Sendeleistungsregelungsschleife an dem E-DCH-Kanal orientiert ist oder nicht. Da die äußere Sendeleistungsregelungsschleife in der Basisstation realisiert ist, ist das Teilnehmer-Endgerät nicht in Kenntnis, woran sich diese aktuell orientiert. Werden beispielsweise auf dem E-DCH im Vergleich zu dem Release 99-DCH-Kanal nur geringe Datenmengen übertragen, so kann das Teilnehmer-Endgerät annehmen, dass sich die äußere Sendeleistungsregelungsschleife in der Basisstationssteuerung an einem Release-99-DCH-Kanal orientiert. Sofern dies der Fall ist, kann das Teilnehmer-Endgerät der obigen Situation entgegenwirken, indem es die TTI-basierte Skalierung abschaltet.

Gemäß einer zu der ersten Weiterbildung alternativen Weiterbildung der Erfindung wird dem Teilnehmer-Endgerät seitens der Basisstation bzw. der Basisstationssteuerung signalisiert, dass die äußere Sendeleistungsregelungsschleife an bzw. nicht an dem E-DCH-Kanal orientiert ist.

Die Entscheidung über die Verwendung der TTI-basierten Skalierung anhand der vorhergehenden Weiterbildungen kann von dem Teilnehmer-Endgerät gemäß einer hierauf beruhenden Weiterbildung wiederum zu der Basisstation bzw. Basisstationssteuerung signalisiert werden.

Einer weiteren alternativen Weiterbildung zufolge wird dem Teilnehmer-Endgerät seitens der Basisstation bzw. der Basisstationssteuerung signalisiert, dass es eine TTI-basierte Skalierung durchführen soll. Hierdurch wird die Entscheidung über das zu verwendende Skalierungsverfahren auf Seiten des Netzwerkes getroffen, welches zudem in Kenntnis der Vorgehensweise der äußeren Sendeleistungsregelungsschleife ist.

Gemäß einer weiteren Weiterbildung der Erfindung wird in Abhängigkeit von dem Aufbau eines Release-99-DCH-Kanals eine TTI-basierte Skalierung von dem Teilnehmer-Endgerät verwendet. Eine TTI-basierte Skalierung wird somit nur dann verwendet, wenn ein Release 99-DCH-Kanal konfiguriert wurde. Sofern dieser nicht besteht, verwendet das Teilnehmer-Endgerät eine Slot-basierte Skalierung.

Die TTI-basierte Skalierung und mithin die unterschiedliche Skalierung von DCH- und E-DCH-Kanälen führt zu einem erhöhten Rechenaufwand in dem Teilnehmer-Endgerät. Insbesondere bei dem Übergang von Slot-basierter zu TTI-basierter Skalierung stehen zur Durchführung von komplexen Berechnungen für die Bestimmung von Gewichtungswerten weniger als die Länge eines Slots zur Verfügung. Gemäß einer weiteren Weiterbildung der Erfindung wird dieses Problem dadurch gelöst, dass das Teilnehmer-Endgerät als letzte von der Basisstation bzw. Basisstationssteuerung empfangene Sendeleistungsregelungsanweisung vor dem Beginn der TTI-basierten Skalierung ein "up"-Kommando annimmt, d.h. eine Forderung nach einer Erhöhung der Sendeleistung, unabhängig von dem tatsächlich empfangenen Kommando. Dies führt vorteilhaft dazu, dass zum einen die Dienstqualität der Release-99-DCH-Kanäle gegenüber der Dienstqualität des E-DCH-Kanals priorisiert wird, und zum anderen bereits nach Empfang des vorletzten Sendeleistungsregelungsanweisungen mit der Berechnung der Gewichtungswerten begonnen werden kann.

Vorteilhaft kann die TTI-basierte Skalierung sowohl für die Erstübertragung eines Datenpakets im Rahmen des HARQ-Verfahrens, als auch für wiederholte Übertragungen verwendet werden. Eine wiederholte Übertragung erfolgt, wenn die vorherige Übertragung von der Basisstation nicht korrekt empfangen werden konnte und daher ein NACK (Not ACKnowledge) zu dem Teilnehmer-Endgerät sendet. In diesem Fall muss das Teilnehmer-Endgerät das gleiche Datenpaket nochmals senden. Für die Erstübertragung muss das Teilnehmer-Endgerät abschätzen, wie viel Leistung für den E-DCH zur Verfügung steht, und anhand dessen eine Größe des nächsten Datenpaketes bestimmen. Dies wird allgemein als Transport Format Selection bezeichnet. Nach der Bestimmung wird das Datenpaket von dem Teilnehmer-Endgerät vor der Aussendung zu der Basisstation kodiert sowie verschachtelt. Da insbesondere die Turbo-Kodierung bei hohen Datenraten zeitaufwändig ist, kann der Fall auftreten, dass bei der Aussendung bzw. bei der Bestimmung der Gewichte sich die Verhältnisse bereits wieder geändert haben und daher wiederum eine Skalierung durchgeführt werden muss. In diesem Fall kann vorteilhaft sowohl eine TTI-basierte Skalierung, beispielsweise 1 bis 2 Slots vor der Aussendung, als auch eine Slot-basierte Skalierung, d.h. unmittelbar vor dem jeweiligen Slot, nach Empfang einer Sendeleistungsregelungsanweisung durchgeführt werden.

Gemäß einem zweiten Verfahren der Erfindung wird von dem Teilnehmer-Endgerät eine Skalierung einer Sendeleistung eines ersten Kanals unabhängig von einer Skalierung einer Sendeleistung zumindest eines zweiten Kanals in Abhängigkeit von einem Aufbau des zumindest einen zweiten Kanals durchgeführt.

Nach einer ersten vorteilhaften Weiterbildung dieses Verfahrens orientiert sich die Sendeleistung des ersten und/oder des zumindest einen zweiten Kanals jeweils an einer Sendeleistung eines dritten Kanals. Dies bedeutet auf einleitend beschriebene Situation beispielsweise, dass sich die Sendeleistungen sowohl eines E-DPDCH als auch eines DPDCH an einem DPCCH orientieren, wobei eine Skalierung des E-DPDCH und DPDCH unabhängig voneinander erfolgt.

Gemäß einer hierauf basierenden Weiterbildung werden für den Fall, dass der zweite Kanal nicht aufgebaut ist, sowohl der erste als auch der dritte Kanal in gleicher Weise skaliert werden, wobei die gleichmäßige Skalierung des ersten und des dritten Kanals nach einer weiteren Weiterbildung beispielsweise bei Erreichen eines bestimmten Wertes eines Verhältnisses der jeweiligen Sendeleistungen zueinander durchgeführt wird.

Dies bedeutet beispielhaft auf obige Situation abgebildet, dass für den Fall, dass der DPDCH nicht aufgebaut ist, der E-DPDCH skaliert werden kann, ab einem bestimmten Verhältnis der Sendeleistungen des E-DPDCH und DPCCH jedoch ergänzend auch der DPCCH mit beispielsweise einem gleichen Faktor skaliert wird.

Ein erfindungsgemäßes Teilnehmer-Endgerät weist Mittel auf, welche eine Realisierung der erfindungsgemäßen Verfahren ermöglichen, insbesondere eine Sende-/Empfangseinrichtung zum Senden und Empfangen von Daten auf Kanälen über eine Funkschnittstelle zwischen dem Teilnehmer-Endgerät und einer Basisstation sowie eine Steuereinrichtung zum Steuern einer Sendeleistung der jeweiligen Kanäle sowie deren Skalierung.

Die Erfindung wird nachfolgend anhand eines Ausführungsbeispiels näher dargestellt. Dabei zeigen

FIG 1      ein Blockschaltbild eines Funk-Kommunikationssystems basierend auf dem UMTS-Standard, und

FIG 2a,2b      Zeitdiagramme für die Anpassung der Skalierung.

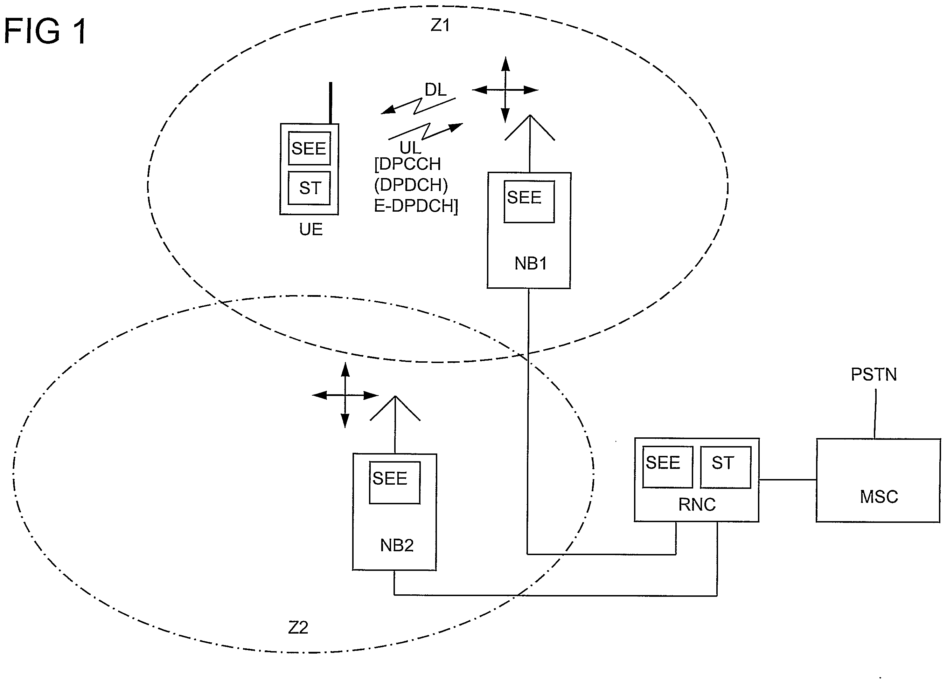

In der FIG 1 ist beispielhaft eine vereinfachte Struktur eines Funk-Kommunikationssystems nach dem bekannten UMTS-Standard dargestellt, wobei eine Realisierung des erfindungsgemäßen Verfahrens in Funk-Kommunikationssystemen nach anderen Standards in gleicher Weise möglich ist.

Die Struktur eines Funk-Kommunikationssystems nach dem UMTS-Standard besteht aus einer oder mehreren Mobilvermittlungsstelle MSC (Mobile Switching Center), welche eine Vermittlung von so genannten leitungsvermittelte Verbindungen (engl. Circuit Switched) sowie eine Verwaltung von verschiedenen Funktionalitäten des Systems durchführen. Die Mobilvermittlungsstelle MSC übernimmt zudem die Funktion des Übergangs zu dem öffentlichen Telefonnetz PSTN (Public Switched Telephone Network). Neben der Mobilvermittlungsstelle existieren nicht dargestellte so genannte Gateways, SGSN bzw. GGSN, welche einen Übergang in Netzwerke mit paketorientierter Übertragung, beispielsweise dem Internet, ermöglichen.

An die Mobilvermittlungsstelle MSC bzw. Gateways sind eine Vielzahl von Funknetzsteuerungen RNC (Radio Network Controller) angeschlossen, in denen unter anderem physikalische Ressourcen der Funkschnittstelle verwaltet werden. An eine Funknetzsteuerung RNC sind wiederum eine Vielzahl von Basisstationen NB1, NB2 (Node B) angeschlossen, welche unter Nutzung von zugewiesenen physikalischen Ressourcen der Funkschnittstelle Verbindungen zu Teilnehmer-Endgeräten UE (User Equipment) aufbauen und auslösen können. Jede Basisstation NB1, NB2 versorgt mit den zugeteilten physikalischen Ressourcen jeweils mindestens ein geographisches Gebiet, welches auch als Funkzelle Z1, Z2 bezeichnet wird. Die Übertragung auf der Funkschnittstelle erfolgt sowohl in Aufwärts- UL (Uplink) als auch in Abwärtsrichtung DL (Downlink). Sowohl die Basisstationen NB1, NB2 als auch Teilnehmer-Endgeräte UE weisen jeweils Sende/Empfangseinrichtungen SEE für die Signalübertragung auf der Funkschnittstelle auf. Weiterhin weist auch die Funknetzsteuerung RNC eine Sende-/Empfangseinrichtung SEE für einen Austausch von Daten und Signalisierungen mit den Basisstationen sowie der Mobilvermittlungsstelle bzw. Gateways auf. Das Endgerät UE sowie die Funknetzsteuerung RNC weisen zudem jeweils eine Steuereinrichtung ST auf, mit der das erfindungsgemäße Verfahren, wie es nachfolgend beschrieben wird, durchgeführt werden kann.

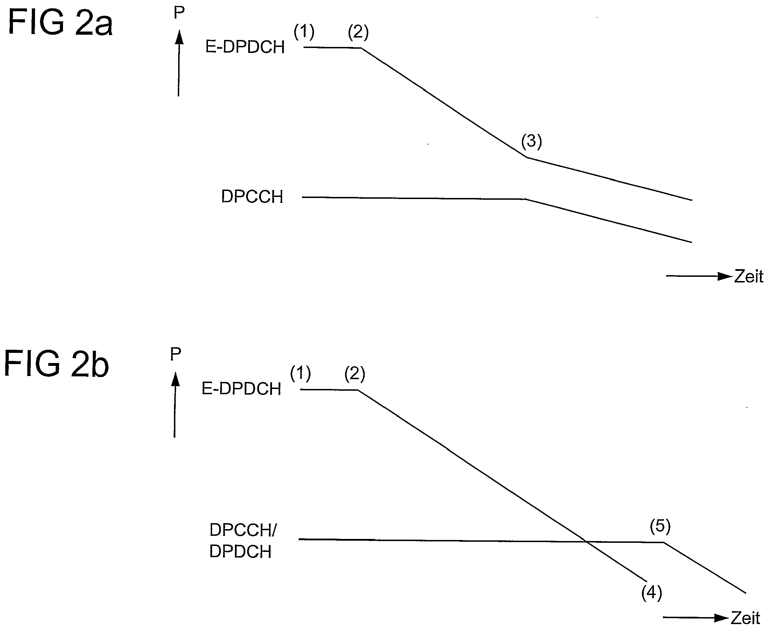

Wie einleitend beschrieben, sei angenommen, dass in Aufwärtsrichtung UL zumindest ein E-DPDCH für eine Übertragung von Paketdaten von dem Teilnehmer-Endgerät UE zu der Basisstation NB1, in dessen Funkzelle Z1 sich das Teilnehmer-Endgerät UE aktuell aufhält, konfiguriert ist. Neben dem D-DPDCH existiert ein Steuerungskanal DPCCH, an dem sich nach dem beschriebenen Stand der Technik allgemein die Sendeleistung des E-DPDCH orientiert. Nachfolgend wird das erfindungsgemäße Verfahren Bezug nehmend auf FIG 2a für den Fall, dass neben dem E-DPDCH kein DPDCH konfiguriert ist, und Bezug nehmend auf FIG 2b für den Fall, dass neben dem E-DPDCH auch ein oder mehrere DPDCH konfiguriert sind, beschrieben. Diese Beispiele gehen von jeweils einem Kanal aus, wobei die gleichen Mechanismen auch für den Fall, dass jeweils mehrere Kanäle konfiguriert wurden, anwendbar sind.

Die Ausgangssituation im Zeitpunkt (1) der FIG 2a ist dergestalt, dass der E-DPDCH mit einem bestimmten Verstärkungsfaktor, welcher nach der technischen Spezifikation mit $\beta_{ed}$ bezeichnet wird, zu dem DPCCH von dem Teilnehmer-Endgerät UE ausgesendet wird. Allgemein bezeichnet dieser Verstärkungsfaktor $\beta_{ed}$ ein Verhältnis der Amplituden des E-DPDCH und des DPCCH zueinander. Sofern das Teilnehmer-Endgerät UE, wie einleitend beschrieben, verursacht durch die schnelle Sendeleistungsregelung der Basisstation eine maximal zulässige bzw. physikalisch mögliche Sendeleistung überschreiten würde, wird die Leistung P des Sendesignal des Teilnehmer-Endgerätes UE skaliert, um eine Überschreitung der maximalen Sendeleistung zu verhindern. Nach der FIG 2a erfolgt diese Skalierung ab dem Zeitpunkt (2) zunächst nur für den E-DPDCH, währenddessen der DPCCH zunächst nicht skaliert wird. Erreicht bei fortschreitender Skalierung des E-DPDCH das Verhältnis der Sendeleistungen des E-DPDCH und des DPCCH jedoch einen bestimmten Grenzwert, so wird ab dem Zeitpunkt (3) neben dem E-DPDCH auch der DPCCH skaliert. Die Skalierung der beiden Kanäle kann dabei gleichmäßig erfolgen, d.h. mit einem konstanten Verstärkungsfaktor $\beta_{ed}$.

Die Ausgangssituation im Zeitpunkt (1) der FIG 2b entspricht der der FIG 2a, wobei der ergänzend aufgebaute DPDCH mit einem Verstärkungsfaktor 1 zu dem DPCCH angenommen wird. Dieser Verstärkungsfaktor kann jedoch in gleicher Weise einen anderen Wert annehmen, beispielsweise derart, dass der DPDCH mit einer gegenüber dem DPCCH höheren Sendeleistung P von dem Teilnehmer-Endgerät UE ausgesendet wird. Wiederum entsprechend der FIG 2a wird ab dem Zeitpunkt (2), d.h. nach Ermittlung des Erfordernisses einer Skalierung der Sendeleistung zur Verhinderung der Überschreitung der maximalen Sendeleistung, der E-DPDCH skaliert und somit in der Sendeleistung P im Verhältnis zu dem DPCCH reduziert. Der DPDCH hingegen wird zunächst nicht skaliert, d.h. die Skalierung des E-DPDCH erfolgt unabhängig von einer Skalierung des DPDCH. Eine Reduzierung zunächst nur der Sendeleistung des E-DPDCH ist sinnvoll, da die Datenübertragung auf dem E-DPDCH über ein hybrides ARQ-Verfahren abgesichert ist, wohingegen der DPDCH keinerlei derartige Verfahren unterstützt.

Im Gegensatz zu dem Beispiel der FIG 2a erfolgt bei Erreichen eines bestimmten Grenzwertes im Zeitpunkt (3) jedoch beispielsweise keine gleichmäßige Skalierung sowohl des E-DPDCH als auch des DPCCH, sondern der E-DPDCH wird weiter skaliert und somit in der Sendeleistung P verringert. Bei Erreichen eines bestimmten minimalen Verstärkungsfaktors im Zeitpunkt (4) wird jedoch der E-DPDCH beispielsweise in einen so genannten DTX-Modus (discontinuous transmission) geschaltet, d.h. es werden keine Daten mehr auf dem E-DPDCH von dem Teilnehmer-Endgerät UE ausgesendet, währenddessen DPDCH und DPCCH weiterhin ausgesendet werden. Sofern eine weitere Reduzierung der Sendeleistung erforderlich ist, werden zu einem späteren Zeitpunkt (5) beispielsweise auch der DPDCH sowie der DPCCH skaliert.

Ergänzend zu der vorangehenden Beschreibung werden nachfolgend auf einleitend genannter technischer Spezifikation 3GPP TS 25.214 V6.5.0 (2005-03) basierende geänderte sowie ergänzte Kapitel angegeben, die das erfindungsgemäße Verfahren widerspiegeln.

5.1.2.5B.2 DPCCH/ E-DPDCH

5.1.2.5B.2.1 Allgemeines

Der E-DPDCH-Verstärkungsfaktor $\beta_{ed}$, der in [3] Unterkapitel 4.2.1.3 definiert ist, kann für jeden E-TFC einen anderen Wert annehmen. Im allgemeinen werden die Verstärkungsfaktoren für verschiedene E-TFCs, wie in Unterkapitel 5.1.2.5B.2.3 beschrieben, berechnet, und nur der Verstärkungsfaktor des/der E-TFC(s), der/die als Referenz-E-TFC(s) verwendet wird/werden, ist so konfiguriert, wie in Unterkapitel 5.1.2.5B.2.2 beschrieben. Zumindest der niedrigste E-TFC des von dem Netz konfigurierten Satzes von E-TFCs soll als ein Referenz-E-TFC signalisiert werden.

Die Verstärkungsfaktoren können je nach dem verwendeten E-DCH-TTI auf Funkrahmenbasis oder Teilrahmenbasis variieren. Zudem ist die Einstellung von Verstärkungsfaktoren von der inneren Leistungsregelungsschleife unabhängig.

Im Fall von Anfangsübertragungen ist die Einstellung der Verstärkungsfaktoren unabhängig von $N_{scale}$ ($N_{scale} = 0$, $\gamma = 0$).

Im Fall von Neuübertragungen wird $\gamma$ berechnet gemäß:

$$\gamma = \frac{N_{scale} \cdot (1 - 10^{\frac{\Delta_{TPC}}{10}})}{2\,N_{TTI}}$$

wobei $N_{TTI}$ die Anzahl der Slots des E-DCH-TTI und $N_{scale}$ die Anzahl der Slots bei der letzten Übertragung des gemäß 5.1.2.6 skalierten HARQ-Prozesses ist.

5.1.2.5B.2.2 Signalisierte Verstärkungsfaktoren

Der Verstärkungsfaktor $\beta_{ed}$ wird berechnet gemäß

$$\beta_{ed} = (1 + \gamma) \cdot \beta_c \cdot 10^{\left(\frac{\Delta_{E\text{-}DPDCH}}{20}\right)}$$

wobei der $\beta_c$-Wert durch eine höhere Schicht signalisiert oder, wie in Unterkapitel 5.1.2.5.2 oder 5.1.2.5.3 beschrieben, berechnet wird, und $\Delta_{E\text{-}DPDCH}$ ist in [3] Unterkapitel 4.2.1.3 definiert.

5.1.2.5B.2.3 Berechnete Verstärkungsfaktoren

Der Verstärkungsfaktor $\beta_{ed}$ eines E-TFC wird auf der Basis der signalisierten Einstellungen für seinen entsprechenden Referenz-E-TFC berechnet. $E\text{-}TFCI_{ref,m}$ solle den E-TFCI des m-ten Referenz-E-TFC bezeichnen, wobei $m = 1, 2, ..., M$ und M die Anzahl signalisierter Referenz-E-TFCs ist und $E\text{-}TFCI_{ref,1} < E\text{-}TFCI_{ref,2} < ... < E\text{-}TFCI_{ref,M}$. $E\text{-}TFCI_j$ solle den E-TFCI des $j$-ten E-TFC bezeichnen. Für den $j$-ten E-TFC: Falls $E\text{-}TFCI_j \geq E\text{-}TFCI_{ref,M}$, dann ist der Referenz-E-TFC der M-te Referenz-E-TFC.

Falls $E\text{-}TFCI_{ref,1} \leq E\text{-}TFCI_j < E\text{-}TFCI_{ref,M}$, dann ist der Referenz-E-TFC der m-te Referenz-E-TFC derart, daß $E\text{-}TFCI_{ref,m} \leq E\text{-}TFCI_j < E\text{-}TFCI_{ref,m+1}$.

$\beta_{ed,ref}$ soll den Verstärkungsfaktor des Referenz-E-TFC bezeichnen. Außerdem soll $L_{e,ref}$ die Anzahl der für den Referenz-E-TFC verwendeten E-DPDCHs bezeichnen und $L_{e,j}$ die Anzahl der für den $j$-ten E-TFC verwendeten E-DPDCHs bezeichnen. Falls SF2 verwendet wird, sind $L_{e,ref}$ und $L_{e,j}$ die äquivalente Anzahl von physischen Kanälen unter Annahme von SF4. Es soll $K_{e,ref}$ die Anzahl von Datenbits des Referenz-E-TFC und $K_{e,j}$ die Anzahl von Datenbits des $j$-ten E-TFC bezeichnen.

Für den $j$-ten E-TFC wird der Verstärkungsfaktor $\beta_{ed,j}$ dann berechnet als:

$$\beta_{ed,j} = (1 + \gamma) \cdot \beta'_{ed,ref} \sqrt{\frac{L_{e,ref}}{L_{e,j}}} \sqrt{\frac{K_{e,j}}{K_{e,ref}}}$$

5.1.2.6 Maximale und minimale Leistungsgrenzen

5.1.2.6.1 Slot-basierte Leistungsskalierung

Falls die UE-Gesamtsendeleistung (nach dem Anwenden von DPCCH-Leistungsjustierungen und Verstärkungsfaktoren) den maximal zulässigen Wert übersteigen würde, soll das UE auf die Gesamtsendeleistung eine zusätzliche Skalierung derart anwenden, daß sie gleich der maximal zulässigen Leistung ist. Diese zusätzliche Skalierung soll derart sein, daß das Leistungsverhältnis zwischen DPCCH und DPDCH, DPCCH und HS-DPCCH, DPCCH und E-DPDCH und auch DPCCH und E-DPCCH so bleibt, wie von Unterkapitel 5.1.2.5, 5.1.2.5A, 5.1.2.5B oder 5.1.2.6.2 gefordert.

Eine etwaige Skalierung soll nur an einer DPCCH-Slotgrenze angewendet oder geändert werden. Damit die UE-Gesamtsendeleistung nicht den maximal zulässigen Wert übersteigt, soll die Skalierung unter Verwendung der im nächsten DPCCH-Slot übertragenen maximalen HS-DPCCH-Leistung berechnet werden. Falls entweder eine ACK- oder eine NACK-Übertragung während des nächsten DPCCH-Slot beginnt, soll die maximale HS-DPCCH-Leistung unter Verwendung einer der folgenden berechnet werden:

(a) welcher der Werte $\Delta_{ACK}$ und $\Delta_{NACK}$ verwendet wird danach, ob die Übertragung ACK oder NACK ist, oder
(b) welcher von $\Delta_{ACK}$ und $\Delta_{NACK}$ der größte ist.

Wenn auf einem DPCH gesendet wird, muss das UE nicht in der Lage sein, seine Gesamtsendeleistung unter den in [7] geforderten Mindestpegel zu reduzieren. Er kann dies jedoch tun, vorausgesetzt das Leistungsverhältnis zwischen DPCCH und DPDCH und auch zwischen DPCCH und HS-DPCCH bleibt so, wie in Unterkapitel 5.1.2.5 und 5.1.2.5A spezifiziert. Zudem gelten wie folgt einige weitere Regeln: Falls die UE-Gesamtsendeleistung (nach dem Anwenden von DPCCH-Leistungsjustierungen und Verstärkungsfaktoren) auf oder unter der Gesamtsendeleistung in dem zuvor übertragenen Zeitslot liegen würde und auch auf oder unter der in [7] spezifizierten geforderten Mindestleistung, kann das UE eine zusätzliche Skalierung auf die Gesamtsendeleistung anwenden, und zwar vorbehaltlich der folgenden Einschränkungen:

- Die Gesamtsendeleistung nach dem Anwenden einer etwaigen zusätzlichen Skalierung soll weder die erforderliche Mindestleistung noch die Gesamtsendeleistung in dem zuvor gesendeten Slot übersteigen;

- Die Größe einer etwaigen Reduzierung bei der Gesamtsendeleistung zwischen Slots nach dem Anwenden einer etwaigen zusätzlichen Skalierung soll die Größe der berechneten Leistungsreduzierung vor der zusätzlichen Skalierung nicht übersteigen.

Falls die UE-Gesamtsendeleistung in dem zuvor gesendeten Slot bei oder unter der in [7] spezifizierten erforderlichen Mindestleistung liegt und die DPCCH-Leistungsjustierung und Verstärkungsfaktoren für den aktuellen Slot zu einer Erhöhung der Gesamtleistung führen würden, dann soll keine zusätzliche Skalierung verwendet werden (d.h. die Leistungssteuerung soll wie normal arbeiten).

Wenn das UE wie oben beschrieben irgendeine zusätzliche Skalierung auf die Gesamtsendeleistung anwendet, soll diese Skalierung in der Berechnung etwaiger DPCCH-Leistungsjustierungen enthalten sein, die in dem nächsten gesendeten Slot angewendet werden sollen.

5.1.2.6.2 TTI-basierte Leistungsskalierung

Falls DPDCH konfiguriert ist und die UE-Gesamtsendeleistung den maximal zulässigen Wert im Fall der beginnenden Grenze des E-DCH-TTI übersteigen würde, dann reduziert der UE nur die E-DCH-Leistung, so daß die UE-Gesamtsendeleistung gleich der maximal zulässigen Leistung unter der Annahme ist, daß letzte das vor der beginnenden Grenze des E-DCH-TTI empfangene Leistungssteuerkommando ein Leistung-"up"-Kommando ist.

**Patentansprüche**

1. Verfahren zur Steuerung einer Gesamtsendeleistung eines Teilnehmer-Endgerätes eines UMTS Funk-Kommunikationssystems, bei dem

   (a) ein erster Kanal (E-DCH) als ein E-DCH Kanal und ein zweiter Kanal (DCH) als ein DCH Kanal definiert wird,
   b) von dem Teilnehmer-Endgerät (UE) eine Skalierung einer Sendeleistung des ersten Kanals (E-DPDCH) unabhängig von einer Skalierung einer Sendeleistung des zumindest einen zweiten Kanals (DPDCH) -nur dann durchgeführt wird,
   (c) wenn eine äußere Senderegelungsschleife der Gesamtsendeleistung nicht an dem ersten Kanal (E-DCH) orientiert ist.

2. Verfahren nach Anspruch 1, bei dem die Sendeleistung des Teilnehmer-Endgerätes (UE) von einer Basisstation (NB1) und/oder einer Funknetzsteuerung (RNC) gesteuert wird.

3. Verfahren nach Anspruch 1 oder 2, bei dem von dem Teilnehmer-Endgerät (UE) mittels bestimmter Charakteristika oder Heuristik ermittelt wird, ob die Regelung der Sendeleistung an dem ersten Kanal (E-DPDCH) orientiert ist oder nicht.

4. Verfahren nach Anspruch 2, bei dem dem Teilnehmer-Endgerät (UE) von der Basisstation (NB1) und/oder der Funknetzsteuerung (RNC) signalisiert wird, die Sendeleistung an dem ersten Kanal (E-DPDCH) orientiert ist oder nicht orientiert ist.

5. Verfahren nach Anspruch 3 oder 4, bei dem von dem Teilnehmer-Endgerät (UE) die Durchführung der Skalierung der Sendeleistung (P) unabhängig von der Skalierung der Sendeleistung des zumindest einen zweiten Kanals (DPDCH) zu der Basisstation (NB1) und/oder der Funknetzsteuerung (RNC) signalisiert wird.

6. Verfahren nach Anspruch 2, bei dem dem Teilnehmer-Endgerät (UE) von der Basisstation (NB1) und/oder der Funknetzsteuerung (RNC) signalisiert wird, dass es die Skalierung der Sendeleistung unabhängig von der Skalierung der Sendeleistung des zumindest einen zweiten Kanals (DPDCH) durchführen soll.

7. Verfahren nach einem vorhergehenden Anspruch, bei dem von dem Teilnehmer-Endgerät (UE) in Abhängigkeit von einem Aufbau zumindest eines der zweiten Kanäle (DPDCH) die Skalierung der Sendeleistung unabhängig von der Skalierung der Sendeleistung des zumindest einen zweiten Kanals (DPDCH) durchgeführt wird.

8. Verfahren nach einem vorhergehenden Anspruch, bei dem von dem Teilnehmer-Endgerät (UE) vor der Durchführung der Skalierung der Sendeleistung unabhängig von der Skalierung der Sendeleistung des zumindest einen zweiten Kanals (DPDCH) eine Sendeleistungsregelungsanweisung als eine Anweisung zur Erhöhung der Sendeleistung angenommen wird.

9. Verfahren nach einem vorhergehenden Anspruch, bei dem
die Skalierung von dem Teilnehmer-Endgerät (UE) bei Erreichen einer maximalen Sendeleistung durchgeführt wird.

10. Verfahren zur Steuerung einer Gesamtsendeleistung eines Teilnehmer-Endgerätes eines UMTS Funk-Kommunikationssystems, bei dem

   (a) ein erster Kanal (E-DPDCH) als ein E-DCH Kanal und ein zweiter Kanal (DPDCH) als ein DCH Kanal definiert wird,
   (b) von dem Teilnehmer-Endgerät (UE) eine Skalierung einer Sendeleistung des ersten Kanals (E-DPDCH) unabhängig von einer Skalierung einer Sendeleistung des zumindest einen zweiten Kanals (DPDCH) in Abhängigkeit von einem Aufbau des zumindest einen zweiten Kanals (DPDCH) durchgeführt wird.

11. Verfahren nach Anspruch 10, bei dem
sich die Sendeleistung des ersten (E-DPDCH) und/oder des zumindest
eines zweiten Kanals (DPDCH) jeweils an einer Sendeleistung eines dritten Kanals (DPCCH) orientiert.

12. Verfahren nach Anspruch 11, bei dem
für den Fall, dass der zweite Kanal (DPDCH) nicht aufgebaut ist, sowohl der erste (E-DPDCH) als auch der dritte Kanal (DPCCH) in gleicher Weise skaliert werden.

13. Verfahren nach Anspruch 12, bei dem
die gleichmäßige Skalierung des ersten (E-DPDCH) und des dritten Kanals (DPCCH) bei Erreichen eines bestimmten Wertes eines Verhältnisses der jeweiligen Sonderleistungen (P) zueinander durchgeführt wird.

14. Verfahren nach einem der Ansprüche 11 bis 13, bei dem der dritte Kanal (DPCCH) als ein DCH-Kanal eines UMTS-Funk-Kommunikationssystems definiert werden.

15. Verfahren nach einem der vorhergehenden Ansprüche, bei dem die Skalierung des ersten Kanals mittels einer "E-DCH-TTI"-basierten Skalierung und die Skalierung des zumindest einen zweiten Kanals mittels einer "slot"-basierten Skalierung durchgeführt wird.

16. Verfahren nach Anspruch 15 und einem der Ansprüche 11 bis 14, bei dem die Skalierung des dritten Kanals mittels einer "slot"-basierten Skalierung durchgeführt wird.

17. Teilnehmer-Endgerät (UE) eines Funk-Kommunikationssystems, aufweisend Mittel (SEE, ST) zum Durchführen der Verfahren nach Anspruch 1 oder 10.

**Claims**

1. Method for controlling a total transmission power of a subscriber terminal of a UMTS radio communication system, in which

   (a) a first channel (E-DCH) is defined as an E-DCH channel and a second channel (DCH) is defined as a DCH channel,
   (b) the subscriber terminal (UE) performs scaling of a transmission power of the first channel (E-DPDCH) independently of scaling of a transmission power of the at least one second channel (DPDCH) only
   (c) if an outer transmission control loop for the total transmission power is not oriented to the first channel (E-DCH).

2. Method according to Claim 1, in which
the transmission power of the subscriber terminal (UE) is controlled by a base station (NB1) and/or a radio network controller (RNC).

3. Method according to Claim 1 or 2, in which
the subscriber terminal (UE) uses particular characteristics or heuristics to ascertain whether or not the control of the transmission power is oriented to the first channel (E-DPDCH).

4. Method according to Claim 2, in which
the subscriber terminal (UE) is provided with signalling, by the base station (NB1) and/or the radio network controller (RNC), indicating that the transmission power is oriented or not oriented to the first channel (E-DPDCH).

5. Method according to Claim 3 or 4, in which
the subscriber terminal (UE) signals the performance of the scaling of the transmission power (P) independently of the scaling of the transmission power of the at least one second channel (DPDCH) to the base station (NB1) and/or the radio network controller (RNC).

6. Method according to Claim 2, in which
the subscriber terminal (UE) is provided with signalling, by the base station (NB1) and/or the radio network controller (RNC), indicating that it is supposed to perform the scaling of the transmission power independently of the scaling of the transmission power of the at least one second channel (DPDCH).

7. Method according to one preceding claim, in which the subscriber terminal (UE) takes set-up of at least one of the second channels (DPDCH) as a basis for performing the scaling of the transmission power independently of the scaling of the transmission power of the at least one second channel (DPDCH).

8. Method according to one preceding claim, in which the subscriber terminal (UE) precedes the performance of the scaling of the transmission power independently of the scaling of the transmission power of the at least one second channel (DPDCH) by accepting a transmission power control instruction as an instruction to raise the transmission power.

9. Method according to one preceding claim, in which the scaling is performed by the subscriber terminal (UE) when a maximum transmission power is reached.

10. Method for controlling a total transmission power of a subscriber terminal of a UMTS radio communication system, in which

(a) a first channel (E-DPDCH) is defined as an E-DCH channel and a second channel (DPDCH) is defined as a DCH channel,
(b) the subscriber terminal (UE) performs scaling of a transmission power of the first channel (E-DPDCH) independently of scaling of a transmission power of the at least one second channel (DPDCH) on the basis of set-up of the at least one second channel (DPDCH).

11. Method according to Claim 10, in which the transmission power of the first (E-DPDCH) and/or the at least one second (DPDCH) channel is respectively oriented to a transmission power of a third channel (DPCCH).

12. Method according to Claim 11, in which if the second channel (DPDCH) has not been set up, then both the first (E-DPDCH) and the third (DPCCH) channel are scaled in the same way.

13. Method according to Claim 12, in which the uniform scaling of the first (E-DPDCH) and the third (DPCCH) channel is performed when a particular value is reached for a ratio of the respective special powers (P) to one another.

14. Method according to one of Claims 11 to 13, in which the third channel (DPCCH) is defined as a DCH channel of a UMTS radio communication system.

15. Method according to one of the preceding claims, in which the scaling of the first channel is performed by means of "E-DCH-TTI"-based scaling and the scaling of the at least one second channel is performed by means of "slot"-based scaling.

16. Method according to Claim 15 and one of Claims 11 to 14, in which the scaling of the third channel is performed by means of "slot"-based scaling.

17. Subscriber terminal (UE) of a radio communication system, having means (SEE, ST) for performing the methods according to Claim 1 or 10.

**Revendications**

1. Procédé de commande d'une puissance d'émission totale d'un terminal d'usager d'un système de radiocommunication UMTS, selon lequel

(a) un premier canal (E-DCH) est défini en tant que canal E-DCH et un deuxième canal (DCH), en tant que canal DCH ;
b) le terminal d'usager (UE) effectue une mise à l'échelle d'une puissance d'émission du premier canal (E-DPDCH) indépendamment d'une mise à l'échelle d'une puissance d'émission de l'au moins un deuxième canal (DPDCH) uniquement lorsque
(c) une boucle externe de régulation d'émission de la puissance d'émission totale n'est pas orientée sur le premier canal (E-DCH).

2. Procédé selon la revendication 1, selon lequel la puissance d'émission du terminal d'usager (UE) est commandée par une station de base (NB1) et/ou une commande de réseau radio (RNC).

3. Procédé selon la revendication 1 ou 2, selon lequel le terminal d'usager (UE) détermine, au moyen de certaines caractéristiques ou d'une heuristique, si la régulation de la puissance d'émission est orientée sur le premier canal (E-DPDCH) ou non.

4. Procédé selon la revendication 2, selon lequel la station de base (NB1) et/ou la commande de réseau radio (RNC) signalent au terminal d'usager (UE) si la puissance d'émission est orientée sur le premier canal (E-DPDCH) ou non.

5. Procédé selon la revendication 3 ou 4, selon lequel le terminal d'usager (UE) signale la réalisation de la mise à l'échelle de la puissance d'émission (P) indépendamment de la mise à l'échelle de la puissance d'émission de l'au moins un deuxième canal (DPDCH) à la station de base (NB1) et/ou à la commande de réseau radio (RNC).

**6.** Procédé selon la revendication 2, selon lequel la station de base (NB1) et/ou la commande de réseau radio (RNC) signalent au terminal d'usager (UE) qu'il doit procéder à la mise à l'échelle de la puissance d'émission indépendamment de la mise à l'échelle de la puissance d'émission de l'au moins un deuxième canal (DPDCH).

**7.** Procédé selon une revendication précédente, selon lequel le terminal d'usager (UE) exécute, en fonction d'un établissement d'au moins l'un des deuxièmes canaux (DPDCH), la mise à l'échelle de la puissance d'émission indépendamment de la mise à l'échelle de la puissance d'émission de l'au moins un deuxième canal (DPDCH).

**8.** Procédé selon une revendication précédente, selon lequel le terminal d'usager (UE), avant l'exécution de la mise à l'échelle de la puissance d'émission indépendamment de la mise à l'échelle de la puissance d'émission de l'au moins un deuxième canal (DPDCH), comprend un ordre de régulation de puissance d'émission comme un ordre d'augmenter la puissance d'émission.

**9.** Procédé selon une revendication précédente, selon lequel la mise à l'échelle est exécutée par le terminal d'usager (UE) à l'obtention d'une puissance d'émission maximale.

**10.** Procédé de commande d'une puissance d'émission totale d'un terminal d'usager d'un système de radiocommunication UMTS, selon lequel

    (a) un premier canal (E-DPDCH) est défini en tant que canal E-DCH et un deuxième canal (DPDCH), en tant que canal DCH ;
    (b) le terminal d'usager (UE) effectue une mise à l'échelle d'une puissance d'émission du premier canal (E-DPDCH) indépendamment d'une mise à l'échelle d'une puissance d'émission de l'au moins un deuxième canal (DPDCH) en fonction d'un établissement de l'au moins un deuxième canal (DPDCH).

**11.** Procédé selon la revendication 10, selon lequel la puissance d'émission du premier (E-DPDCH) et/ou de l'au moins un deuxième canal (DPDCH) s'orientent respectivement sur une puissance d'émission d'un troisième canal (DPCCH).

**12.** Procédé selon la revendication 11, selon lequel non seulement le premier (E-DPDCH), mais aussi le troisième canal (DPCCH) sont mis à l'échelle de la même manière au cas où le deuxième canal (DPDCH) n'est pas établi.

**13.** Procédé selon la revendication 12, selon lequel la mise à l'échelle uniforme du premier (E-DPDCH) et du troisième canal (DPCCH) est effectuée à l'obtention d'une valeur déterminée d'un rapport des puissances d'émission respectives (P) entre elles.

**14.** Procédé selon l'une des revendications 11 à 13, selon lequel le troisième canal (DPCCH) est défini en tant que canal DCH d'un système de radiocommunication UMTS.

**15.** Procédé selon l'une des revendications précédentes, selon lequel la mise à l'échelle du premier canal est effectuée au moyen d'une mise à l'échelle basée « E-DCH-TTI » et la mise à l'échelle de l'au moins un deuxième canal, au moyen d'une mise à l'échelle basée « slot ».

**16.** Procédé selon la revendication 15 et l'une des revendications 11 à 14, selon lequel la mise à l'échelle du troisième canal est effectuée au moyen d'une mise à l'échelle basée « slot ».

**17.** Terminal d'usager (UE) d'un système de radiocommunication, comportant des moyens (SEE, ST) pour exécuter les procédés selon la revendication 1 ou 10.

# FIG 1

Z1

DL

UL
[DPCCH
(DPDCH)
E-DPDCH]

SEE

ST

UE

SEE

NB1

SEE

NB2

SEE  ST

RNC

PSTN

MSC

Z2

EP 1 864 397 B1

FIG 2a

P

E-DPDCH

(1) (2)

(3)

DPCCH

Zeit

FIG 2b

P

E-DPDCH

(1) (2)

DPCCH/
DPDCH

(5)

(4)

Zeit

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Physical channels and mapping of transport channels onto physical channels (FDD) (Release 6). *3GPP TS 25.211 V6.4.0,* Marz 2005
- FDD Enhanced Uplink; Physical Layer Aspects (Release 6). *3GPP TS 25.808 V6.0.0,* Marz 2005
- FDD Enhanced Uplink; Overall description; Stage 2 (Release 6). *3GPP TS 25.309 V6.2.0,* Marz 2005
- Physical Layer Procedures (FDD) (Release 6). *3GPP TS 25.214 V6.5.0,* Marz 2005
- *Spezifikation 3GPP TS 25.214 V6.5.0,* Marz 2005